Europäisches Patentamt

European Patent Office

Office européen des brevets

(11) Publication number: **0 094 516**
**B1**

(12) **EUROPEAN PATENT SPECIFICATION**

(45) Date of publication of patent specification: **04.07.90**

(51) Int. Cl.⁵: **G 06 F 15/20**

(21) Application number: **83103810.4**

(22) Date of filing: **20.04.83**

(54) **Footnote formatting.**

(30) Priority: **17.05.82 US 378944**

(43) Date of publication of application:
**23.11.83 Bulletin 83/47**

(45) Publication of the grant of the patent:
**04.07.90 Bulletin 90/27**

(84) Designated Contracting States:
**DE FR GB IT**

(56) References cited:
**GB-A- 771 551**
**US-A- 2 762 485**

**IBM TECHNICAL DISCLOSURE BULLETIN vol. 24, no. 11B, April 1982, pages 5860-5861, New York, (US). R.C.NIELSEN: "Adjusting a cross page end code for pagination".**

**INFORMATION STORAGE AND RETRIEVAL vol 10, no. 5-6, Oxford (GB) Pergamon Press 1974, pages 211-228. VINCENT J. RYAN et al.: "Computerized text editing and processing with built-in indexing".**

(73) Proprietor: **International Business Machines Corporation**
**Old Orchard Road**
**Armonk, N.Y. 10504 (US)**

(72) Inventor: **Repass, James Terry**
**13013 Broadmeade Avenue**
**Round Rock Texas 78664 (US)**
Inventor: **Shipp, Kenneth Osborn, Jr.**
**1108 Gemini Drive**
**Austin Texas 78758 (US)**
Inventor: **Wood, Richard Brian**
**808 Cambridge**
**Round Rock Texas 78664 (US)**

(74) Representative: **Bonin, Jean-Jacques et al**
**Compagnie IBM France Département de Propriété Intellectuelle**
**F-06610 La Gaude (FR)**

(56) References cited:
**"THE SEYBOLD REPORT ON WORD PROCESSING", June 1979, vol.2, no.5.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 094 516 B1

**Description**

Technical Field

This invention relates generally to footnoting documents, and more specifically to a method of, and system for, formatting footnotes for display, editing, and ultimate printing.

Background Art

Footnoting of a document such as a legal brief, book, manuscript, etc. is a well known technique of providing both uncluttered and smooth flowing information and thoughts, and background of supporting detail to a reader at different locations within the document. The smooth flowing information is the body text of a document, and the supporting detail is made up of footnote text. In constructing such a document, efficient management has always been an elusive skill. This was so when documents were handwritten, and still presents a significant economic and throughput burden today. This is so even with the availability of flexible keyboard/display word processing systems.

During the handwritten document era, a footnote reference too low on a page often left insufficient room for an aesthetically pleasing, and well placed and proportioned, accompanying footnote or a portion thereof. The solution was to terminate the page earlier than desired, about text against the bottom of the page and chance mismanagement of the succeeding page, write smaller etc. In addition, yet another problem was present with footnoting documents. This problem was in the area of formatting footnotes for functional and aesthetic purposes. For example, for distinguishing one footnote from another, the ability of adding additional line spacing between footnotes, indenting the first line of each footnote, indenting footnotes text as a whole, indenting both the footnote designation and the first line of a footnote, providing body text/footnote separator lines, etc. With the previously mentioned problems already present, addressing formatting was readily overlooked.

Mismanagement and/or early termination, and the ability to efficiently handle a wide range of footnote formatting requirements remain major problems today. This is so even with the availability of modern word processing systems. The available approaches for an operator or author in preparing a footnoted document are for the most part undesirable. Excessive planning is probably the most common approach, and yet, multiple drafts, are the most common result. Partially filled pages, an excessive number of footnote references and footnotes appearing on different pages, an unappealing proportion mismatch of body and footnote text, and an excessive number of pages containing only footnotes remain major problems following planning and multiple drafts.

A number of the above mentioned problems have not gone unnoticed, however. One system on the market today, illustrated by the NBI System 3000 disclosed in "The Seybold Report on Word Processing", June 1979, Vol. 2, No. 5, provides for footnote management upon printout. With this system, an operator can during setup, specify interparagraph spacing which in turn is applicable to footnotes. Following setup, the operator can prepare a footnoted document in one pass, but particular operator attention is required. During preparation, body text is keyed to a body text frame up to a reference point, a footnote reference number is keyed, a footnote frame is called, a corresponding footnote number is keyed a paragraph spacing control is to be keyed if a desired interfootnote spacing is to be established, text for the footnote is keyed, and then the body text frame, is recalled. Body and footnote text are stored separately. The footnote text is stored in a footnote library for later recall. Following document preparation, there is an opportunity to separately review and edit the body and footnote text, but there is no opportunity to display review and edit an assembled document prior to printing. Further, a keyed spacing control can be viewed, but there is no opportunity to view the spacing between footnotes. That is, the first opportunity an operator has to view an assembled document is following printing. During printout, the system merges the body and footnote text. However, resulting aesthetics on occasion are less than desired. This is due in part to imposed system retraints such as a requirement that there be at least one line of body text on each page. In this case, large unprinted areas on numerous pages can occur. Resulting aesthetics can also be less than desired if the operator forgets from time to time to key spacing controls. This results in intermingled spaced and non-spaced footnotes which are not acceptable from an appearance standpoint. Recovery from missing spacing controls with the referenced system is usually only following printing. Thereafter, the operator must scroll through the entire footnote library to pick up and correct all omissions. Following correction, another printing is required. Faced with these time consuming tasks and the inability of the referenced system to more efficiently manage formatting, the capability is usually ignored.

One assumed reason most present day systems have not been structured and/or programmed to efficiently handle even rather simple formatting desires is that the envisioned solutions would require programming and/or structure additions which would be prohibitive from a cost standpoint. With this in mind, any thoughts of providing flexibility in footnote formatting have quickly been abandoned.

The above described capabilities of penmanship and word processing systems are prior art to the extent that a semblance of a desired end result is achievable. What has not been achievable though, is the flexibility to efficiently both meet author desires and manage footnote formatting tasks from input to output. It is these deficiencies which cause the prior art to fall short of either anticipating or rendering the instant invention obvious. More specifically, the ability to automatically control footnote formatting with

2

minimum setup and input keying efforts is lacking. Also lacking is the ability to globally change established formats.

## Disclosure of the Invention

The present invention concerns a text processing system, including a display unit and a keyboard, for formatting separately stored footnote text made up of a number of footnotes, for combination within body text during assembly of a document for display on said display unit, said system including means for formatting said footnote text based on operator's inputs, characterized in that said operator's input specify a maximum number of footnote text lines to be allowed on pages of said document, and an interfootnote spacing to be applied when a plurality of footnotes are to appear on a page of said document, and it comprises means for rendering said interfootnote spacing changeable in the whole document.

In practice the invention is implemented as follows. Prior to input of a document, a menu is presented to the operator for selecting and definining a desired footnote format. The operator has the flexibility of defining the format by specifying a separator line including the makeup thereof, an indent level for both the footnote designations and the first line of each footnote, an indent level for the entire footnote, and an interfootnote spacing to be applied when more than one footnote is to appear on a page of the document. The parameters thus established will remain in effect until changed. A change in any one of these parameters will be global in nature, i.e. will affect the entire document. Thereafter, body text is keyed up to a footnote reference point. During this boy text keying, the text is displayed and editing is permitted. At the footnote reference point, a menu is called from which a footnote task is selected. This causes a display frame to be presented for keying the footnote. Editing of the footnote is also permitted. Following input of the footnote, the operator recalls the body text display frame for continued keying, and the footnote is stored away in a footnote library. Upon recall of the body text display frame, the system applies an appropriate footnote reference designation to the body text at the footnote reference point, and logs the location in the footnote library of the corresponding footnote. Following input keying of the body and footnote text, operator procedure calls for causing the system to assemble the body and footnote text. The assembly operation involves combined merge and pagination operations. Following assembly, the document can be display recalled on a page basis for review and editing. Thereafter, the document is ready to be printed.

During input of a footnote to the footnote frame, one set of the above-mentioned parameters is in effect, and during document assembly all specified parameters will be applied to the footnotes. That is, during input, specified indent levels will be in effect and applied to the keyed and displayed footnotes.

## Brief Description of the Drawing

Figure 1 is a pictorial representation of a newly created page of a footnoted document illustrating the page appearance prior to formatting and assembly.

Figure 2 is a pictorial representation of the page shown in figure 1 after body and footnote text have been formatted and assembled according to a standard set of body text formats and footnote formats.

Figure 3 is a pictorial representation of the page shown in figure 1 after body and footnote text have been formatted and assembled according to a different set of body text formats and footnote formats.

Figure 4 is a pictorial representation of the page shown in figure 1 after body and footnote text have been formatted and assembled according to yet a different set of body text formats and footnote formats.

Figure 5 is a pictorial represnation of the page shown in figure 1 after body and footnote text have been formatted and assembled according to another set of body text formats and footnote formats.

Figure 6 is a pictorial representation of the page shown in figure 1 after body and footnote text have been formatted and assembled according to yet another set of body text formats and footnote formats.

Figure 7 is a pictorial representation of the page shown in figure 1 after body and footnote text has been formatted and assembled with yet a different set of body text formats and footnote formats.

Figure 8 is a block diagram showing a word processing system used for performing the invention of this application.

Figure 9 is a block diagram illustrating the makeup of the processor shown in figure 8.

## Best Mode for Carrying Out the Invention

### General Description

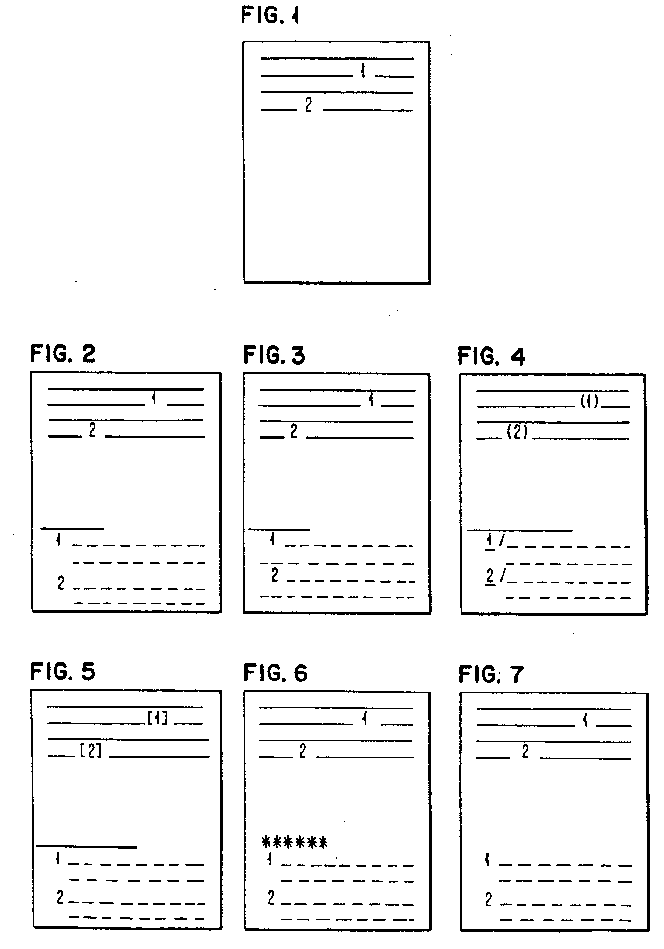

For a general understanding of the invention, reference is first directed to figure 1. In this figure is illustrated one page which can be taken as the first page of any footnoted document. The solid lines represent body text and the dashed lines represent footnote text.

For purposes of the following explanation, it is to be noted that the Arabic numerals 1 and 2 in figure 1 are positionally located, half indexed up on the lines with which they appear. Figure 1 is a pictorial representation of a page of text that has been keyed containing two footnote references. The body text and the footnote text for the two footnote references has not yet been formatted and assembled for display or printing.

Associated with every document is a set of body text formats and a set of footnote formats. The operator has the choice of using a standard default set of formats or may, by pressing a control key, bring up set of menus to customize or alter the body text formats and/or footnote formats.

For example, body text may be formatted specifying left and right margins, maximum number of body text lines allowed on a page, spacing between lines, typestyle (including both font and pitch), indent levels for paragraphs, etc.

Footnote text may be formatted specifying a length, if a separator line and the character to be used therein for separating body text and footnote text, typestyle (including both font and pitch), maximum number of footnote text lines allowed on a page, type of footnote numbering to be used, placement of the footnote within the document, an amount of spacing to be used between each footnote, the indention of both the footnote number and the text that follows, etc.

Figure 2 is a pictorial representation of how the page in figure 1 will display and be printed after formatting and assembly of the body text and footnote text. In figure 2, the footnote designations in the body text and the footnote text are positionally located, half indexed up on the lines with which they appear. The separator line is a short line of underscores. The footnote designation in the footnote text paragraph is indented to the right. In addition there is also one blank line separating the first and second footnotes.

Figure 3 is a pictorial representation of how the page in figure 2 will display and print after formatting and assembly of the body text and footnote text using a different set of formats. Note that the operator could have changed to this different set of formats before any formatting or assembly operation had been performed on the page or afterwards. In other words, the operator may at any time and after any number of formatting and assembly operations change to a different set of formats. The operator is not required to revise each page or each footnote of the document but merely recalls the formatting menus to alter the desired formats and causes a new formatting and assembly operation to take place. Figure 3 illustrates the appearance of the page with the footnote designations in the body text and the footnote text again positionally located, half indexed up on the lines with which they appear. Also, the separator line is again a short line of underscores. However, the body text is indented from the left margin, while the footnote text is not. In addition, the spacing between each footnote is zero. That is, there are no blank lines between each footnote.

Figure 4 is a pictorial representation of the page in yet another format. Here, the format text is indented, the body text is not indented, and the footnote designations are not half indexed up on the lines with which they appear. In addition, the fixed portion of the designations in the body text contain left and right parentheses surrounding the footnote numbers. The parentheses are the fixed portion of the designations and do not change from one footnote reference designation to another. The fixed portion of designations in the footnote text include an underscore and a slash. In addition, the separate line made up of underscores is longer than in figures 2 and 3.

Figure 5 is a pictorial representation of the page in yet another format. It is identical to figure 4 except that a different fixed portion surrounds the footnote numbers which are the variable portion of the designation.

Figures 6 and 7 is a pictorial representation of the page in yet another formats. They are identical to figure 2 except that the separator line in figure 6 is a line of asterisks and in figure has been suppressed.

## Detailed Description

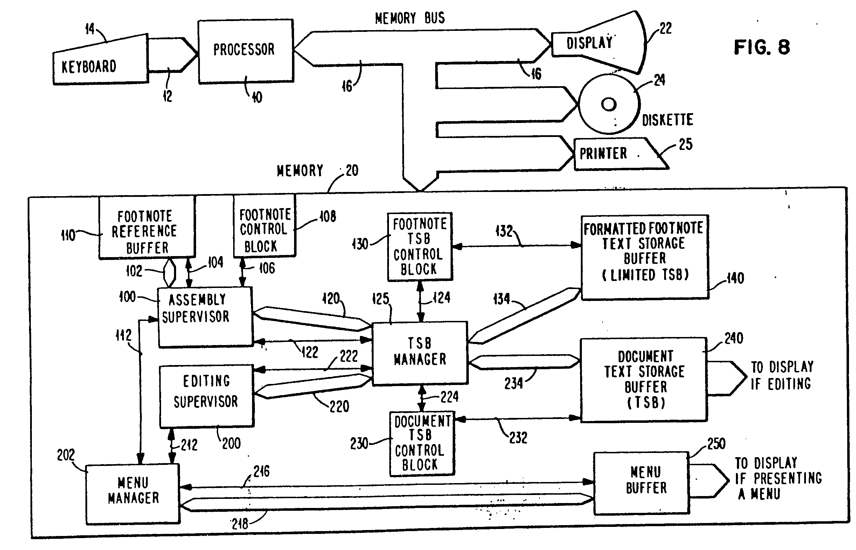

Refer next to FIG. 8. In this figure is shown a portion of a text processing system, including a processor 10 to which is connected a bus 12 leading from a keyboard 14. Character data generated by manual actuation of keys on keyboard 14 causes character related signals to be applied to processor 10. Processor 10 provides on an output memory bus 16 a data stream to which the characters selected by actuation of keyboard 14 appear suitably encoded.

Keyboard 14 is made up of a standard set of alpha/numeric graphic keys for keying characters, numbers, punctuation marks, and symbols, and also includes function and format control keys for causing and controlling a carriage return, indent tab, etc. In addition, the keyboard includes a second set of control keys for issuing special control commands to the system. These control keys are for controlling cursor movement, for setting the keyboard into a number of different modes, for use in conjunction with other keys for defining and controlling operations and other functions, etc.

Memory bus 16 extends to a memory unit 20 which is preferably a random access memory, to a display unit 22, to a diskette unit 24, and to a printer 25.

Included within memory unit 20 are two text storage buffers. One is a formatted footnote text storage buffer (TSB) 140 and the other a document TSB 240. The formatted footnote TSB 140 is used only by an assembly supervisor 100 when a limited footnote resolution algorithm is used to resolve and format footnotes at the bottom of the page. The document TSB 240 is used as a window into indefinite length text pages stored on a diskette readable by unit 24. Both assembly supervisor 100 and an editing supervisor 200 use the document TSB 240.

A footnote TSB control block 130 is linked to formatted footnote TSB 140 via a channel 132. A document TSB control block 230 is linked to document TSB 240 via a channel 232.

TSB manager 125 is linked by channels 124 and 224 to footnote TSB control block 130 and document TSB control block 230, respectively.

TSB manager 125 is linked by channels 134 and 234 to formatted footnote TSB 140 and document TSB 240, respectively. Editing supervisor 200 is linked via channels 220 and 222 to TSB manager 125. Editing

4

supervisor 200 contains keystroke processing routines which are invoked based on the key pressed on keyboard 14.

In operation of the system of FIG. 8, a body text encoded data stream applied along memory bus 16 is stored in document TSB 240. In the process of correcting and editing the contents of the body text in document TSB 240, selected portions or lines of a page are presented to the operator on display unit 22.

In addition to editing the contents of the body text, editing supervisor 200 may also create and revise footnotes within documents TSB 240 in order that footnotes of indefinite length can be supported.

A menu manager 202 is linked via channels 112 and 212 to assembly supervisor 100 and editing supervisor 200, respectively, and is used when a menu is to be displayed. Menu manager 202 is linked via channels 216 and 218 to a menu buffer 250.

Assembly supervisor 100 is linked to TSB manager 125 via channels 120 and 122. Assembly supervisor 100 provides control routines necessary to execute an assembly operation for paginating and merging body text stored in document TSB 240 with formatted footnote text stored either in formatted footnote TSB 240 (if all of the formatted footnote text for the body text page will fit) or on a diskette.

Assembly supervisor 100 is linked to a footnote control block 108 via channel 106. Footnote control block 108 is used to store status information during the assembly operation for resolving and formatting footnotes.

Assembly supervisor 100 is linked to a footnote reference buffer 110 via channels 102 and 104. Footnote reference buffer 110 contains pointers to diskette stored footnote text which has not yet been placed at the bottom of a page or at the end of the document during the assembly operation.

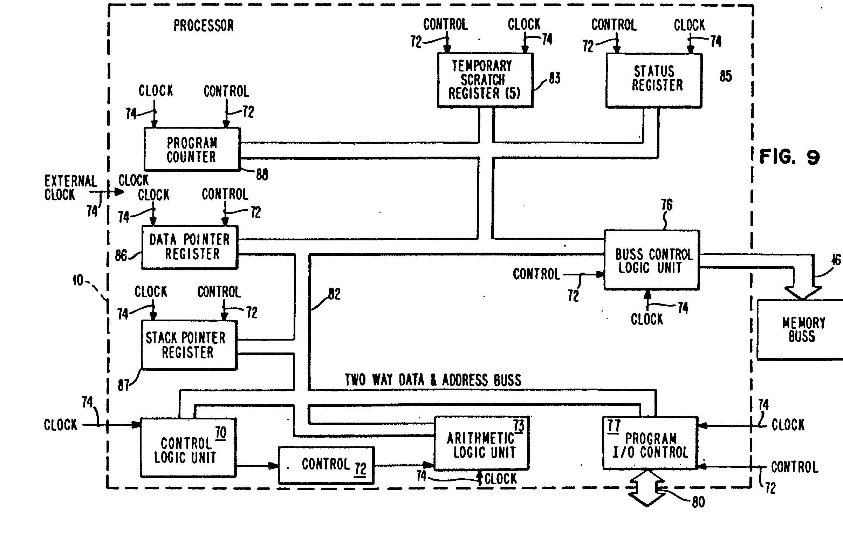

Refer next to FIG. 9. In this figure are shown the details of processor 10 which is capable of performing the operations of this invention under program control. In practice, processor 10 includes an INTEL/ 8086 Microcomputer chip. Typical logic hardware elements forming processor 10 include a control logic unit 70 which responds to instructions from memory 20 on bus 16. The control logic unit 70 is also in the data stream identified by the data and address bus 82 interconnected to various other logic units of processor 10.

In response to instructions from random access memory 20, control logic unit 70 generates control signals to other logic elements of processor 10. These control signals are interconnected to the various elements by means of a control line 72 which is illustrrated directly connected to an arithmetic logic unit 73 and identified as a "control" line 72 to other elements of processor 10. Synchronous operation of the control unit 70 with other logic elements of processor 10 is achieved by means of clock pulses input to processor 10 from an external clock source on bus 74. This bus is also shown interconnected to various other logic elements of processor 10.

Data to be processed in processor 10 is input either through a bus control logic unit 76 or a program input/output control logic unit 77. The bus control logic 76 connects to random access memory 20 and receives instructions for processing data input to input/output control 77. Thus, input/ouput control 77 receives data from keyboard 14 while bus control logic 76 receives instructions from memory 20. Note that different storage sections of memory 20 are identifiable for instruction storage and data storage. Device controls from processor 10 are output through program input/output controller 77 over a data bus 80.

Input data on the data bus 16 is passed internally through processor 10 on the bus 82 to control unit 70. Arithmetic logic unit 73, in response to a control signal on line 72 and in accordance with instructions received on memory bus 16, performs arithmetic computations which may be stored in temporary scratch registers 83. Various other transfers of data between the arighmetic logic unit 73 and other logic elements of processor 10 are of course possible. Such additional transfers may be to a status register 85, data pointer register 86 or a stack pointer register 87. Also in the data stream for these various logic elements by means of the bus 82 is a program counter 88.

A particular operating sequence for processor 10 is determined by instructions on bus 16 and input data on the bus 16 or on bus 80 from keyboard 14. As an example, in response to received instructions, processor 10 transfers data stored in scratch registers 83 to one of registers 86, 87, or 85. Such operations of processors as detailed in Fig. 9 are considered to be well known and understood by one of ordinary skill in the data processing field. A detailed description of each of the operations of the processor of Fig. 9 for the described invention would be counterproductive to an understanding of the invention as claimed.

Table 1 illustrates a routine used by processor 10 for soliciting operator input of footnote formatting information.

EP 0 094 516 B1

Table 1

FOOTNOTE FORMAT ROUTINE

```
BEGIN (FN FMT)
    INITIALIZE WORK SPACE AND CONTROL BLOCKS
    COPY CURRENT VALUE OF ALL MENU OPTIONS
    INITIALIZE DFD (DYNAMIC FRAME DESCRIPTOR) WITH
    MENU OPTION VALUES
    UNTIL MENU IS SUCCESSFULLY EXITED OR CANCELLED DO
        DISPLAY FOOTNOTE FORMAT MENU UNTIL MENU MANAGER
        RETURNS
        VALIDATE/COMPARE VALUES
        IF THE "CHANGE FOOTNOTE TYPING OPTIONS"
        DIRECTIVE OPTION WAS SELECTED THEN
            DISPLAY FOOTNOTE TYPING OPTIONS MENU AND SAVE
            OPERATOR INPUT FOR LEADING/TRAILING CHARACTERS
            AND "FOOTNOTE CONTINUED" TEXT
        ELSE
            IF A PARAMETER CONFLICT EXISTS THEN
                POST OPERATOR MESSAGE
            ELSE
                INDICATE FOOTNOTE FORMAT MENU HAS SUCCESSFULLY
                EXITED
            ENDIF
        ENDIF
    ENDDO
    FREE WORK SPACE
    RETURN
END TABLE 1 (FN FMT)
```

FOOTNOTE FORMAT

If a "Change Footnote Format" option is selected in a Format Selection menu presented to the operator for any number of tasks, then the system displays a Footnote Format menu as shown in MENU 1 below. The Footnote Format is a part of both the Document and Alternate Document Format of the document. The Document and Alternate Document Format are two independent sets of formats which the operator may begin using at the top of any page in the document. Unless specified otherwise, the system defaults to the Document Format.

## MENU 1

| Chg Document Fmt | Brief | Ins |
|---|---|---|
| DSK001 | | Kyb 1  Pitch 12 |

FOOTNOTE FORMAT

| ID | ITEM | YOUR CHOICE | POSSIBLE CHOICES |
|---|---|---|---|
| a | Typestyle Number | | 1-31 (10 Pitch) |
| | | | 80-111 (12 Pitch) |
| | | | 154-175 |
| | | | (Proportional) |
| | | | 215-230(15 Pitch) |
| b | Separator Character | _ | Any available character |
| c | Number of Separator Characters | 20 | 1 - 450 |
| d | Maximum Number of Footnote Text Lines Per Page | 48 | 1 - 999 |
| e | Number of Lines Between Footnotes | 0 | 0 - 999 |
| f | Footnote Numbering | 1 | 1 = Document<br>2 = Page |
| g | Footnote Numbering Graphic | | Any available character, or none |
| h | Footnote Placement | 2 | 1 = Document<br>2 = Page |
| i | Change Footnote Typing Options | | |

When Finished with this menu, press ENTER.
Type ID letter to choose ITEM; press ENTER:

Each ITEM in MENU 1 is briefly described below.

Typestyle Number: A plurality of choices of fonts including a variety of typestyles and pitches are available from MENU 1. Both typestyle and pitch are determined by a Font ID selected by the operator from POSSIBLE CHOICES. If no ID is specified, the system will use a Line Format typestyle default value.

Separator Character: Any graphic character available on a selected font can be specified or selected by the operator to form a separator line separating body and footnote text.

Number of Separator Characters: The operator can specify the number of characters to be used in making up the separator line. The number will only be measure limited. It is to be noted that a blank line will always precede and follow the separator line.

Maximum Number of Footnote Text Lines per Page: The number specified by the operator will be the maximum number of lines available at the bottom of the page for footnote text. Included with this number will be a specified number of lines between footnotes. Not included in the specified number are the blank lines before and following the separator line, the separator line, and a dedicated line at the bottom of the page. Although not included in the maximum number of footnote text lines, these lines are included in the total page line count.

Number of Lines Between Footnotes: The operator can specify the interfootnote line spacing for formatting purposes to improve aesthetics. Footnote text will always be single spaced.

Footnote Numbering: An operator can specify whether or not footnote numbering is to be reset at page boundaries.

Footnote Numbering Graphic: If footnote numbering is to be reset at page boundaries and a non-numeric graphic character such as an asterisk is specified, the first footnote will be numbered "*", the second will be numbered "**", etc.

Footnote Placement: The operator can specify whether or not footnotes are formatted and placed at the bottom of each page or the end of the document.

Range: 1 = Yes   2 = No.

Following selections from MENU 1 and depression of the ENTER key, a Footnote Typing Options Format menu will be presented to the operator. This is illustrated below as MENU 2 wherein choices are available for the fixed portion of both footnote and footnote reference designations. The type of the variable portions of the footnote and footnote reference designations is selected from MENU 1.

```
                              MENU  2
_____

Chg Document Fmt      Brief       Ins

DSK001                                    Kyb 1       Pitch 12
_____

                  FOOTNOTE TYPING OPTIONS

                              YOUR              POSSIBLE

   ID  ITEM                   CHOICE            CHOICES

   For Body Text:

   a   Leading Characters     "! INX UP"        Up to 8

                                                characters,

                                                or none

   b   Trailing Characters    "! INX DOWN"         "


   For Footnote Text:

   c   Leading Characters     "! INX UP"           "

   d   Trailing Characters    "! INX DOWN"         "

   e   'Continued Footnote'  (Footnote Continued)
       Message Characters


   When finished with this menu, press ENTER.

   Type ID letter to choose ITEM; press ENTER:
_____
```

An explanation of each ITEM listed in MENU 2 is set out below.

Leading Characters: These characters include both controls and graphics to be generated by the system immediately before the variable portion of the footnote and footnote reference designation both in body and footnote text.

Trailing Characters: These characters include both controls and graphics to be generated by the system immediately after the variable portion of the footnote and footnote reference designation both in body and footnote text.

'Continued Footnote' Message Characters: Any character, tab, indent tab, space, required space, required backspace, or word underscore can be selected for system placement 1) following the last footnote line on a page, and 2) before the first footnote line on the next page when a footnote "spills over" from one page to the next.

When the operator completes entry of all desired choices and depresses the Enter Key against a prompt to type the ID to choose an item displayed on the Prompt Line, the system will update the Document or Alternate Format of the document with the values selected by the operator and re-display the Format Selection menu.

Following the above set up routine, the operator is now ready to begin preparing a footnoted document.

Footnotes are created during the normal Create/Revise Document task via a Footnote instruction. When the operator selects "Footnote" from an Instruction Menu and depresses the Enter key, a Footnote Menu illustrated below as MENU 3 will be presented.

```
___ _____ MENU  3 _____ .

Create Document        Brief       Ins

DISK01 _____ Pg. 1 _____ Ln.13  Kyb 1 ____

                                FOOTNOTE

                                 YOUR             POSSIBLE
   ID      ITEM                 CHOICE            CHOICES


    a      Create/Revise           1              1 = Yes
           Footnote Text                          2 = No


    b      Reset Footnote Number
           or Character


    c      Document Name


    d      Diskette Name


    e      System Page Number


       When finished with this menu, press ENTER.

       Type ID letter to choose ITEM; press ENTER: _____
```

The ITEMS against which the operator makes choices are described below.

Create or Revise Footnote Text: Operator selection here is for calling a blank Footnote Typing Frame illustrated as FRAME 1 later herein if typing a new footnote is in order, or a Footnote Typing Frame with an existing footnote as illustrated in FRAME 2 later herein in order for the operator to make revisions.

Reset Footnote Number of Character: This option is selected whenever the operator desires to override the automatic system-generated sequence of footnote numbering or designations (i.e., 1, 2, 3, . . .) by specifying a specific number of other graphic character or characters.

If a number is entered, then footnote numbering by the system will be reset to that value. If a graphic is entered, then the automatic sequencing of numeric values will be suspended until the next "null" or numeric value is encountered.

The following two items should only be selected if footnotes are to be stored in a document other than the editing document.

Document Name: Selection here is to 1) store footnote text to be created, 2) locate footnote text to be revised, or 3) locate existing footnote text to be included in the document.

Diskette Name: The name of the diskette on which the above document resides is entered by the operator.

System Page Number: An entry here is for calling a page which contains the footnote text. If both the Document Name and Diskette Name are blank, then the system will assume that footnote text is to be stored with the document being created or edited. The system will store the footnote text on the next available page on or above 9000 (i.e., 9000, 9000.0.1, 9000.0.2, . . . .) and after existing footnote pages.

If the operator specifies another Document Name/Diskette Name, then any page number of that document may be used to store the footnote text. If no page number is specified, then the first available page will be used. The operator may also specify that a particular existing page number be used by selecting this ITEM and entering the page number.

The Footnote Instruction thus created in memory will have the following makeup:

1) Footnote Reference Control (FTR) followed by the following controls:
2) Begin Formatted Text Control (BFT)
3) Leading characters
4) Footnote number
5) Trailing characters
6) End Formatted Text Control (EFT)

The BFT/EFT control pair is used by the system to identify data that was generated by the system and may be later updated or modified by the system.

The value of the footnote number itself may be:

1) Sequentially assigned by the system when the footnote instruction is created (and prior to assembly for merging and paginating the footnote and body text).
2) Explicitly assigned by the operator when the footnote instruction is created.
3) Determined by the system during the assembly operation.

As a result, a footnote number (together with any leading and/or trailing characters) will always appear in the body text after a footnote instruction is created.

Upon revising a footnote instruction, the Footnote Instruction can be altered by placing the cursor on the Footnote Instruction and pressing the Enter key. The Footnote Menu (MENU 3) will be recalled.

During creation or revision of footnote text, if "Create or Revise Footnote Text" is set to "Yes" in the Footnote Menu (MENU 3), a Footnote Typing Frame (Frames 1 and 2) will be displayed when the ENTER key is depressed.

## FRAME 1

```
                    (Footnote Typing Frame - Create)

     Create Footnote      Brief           Ins

     DISK01                    Pg. 1       Ln.13  Kyb 1 Pitch 12



     When finished, press ENTER.


     _____
```

FRAME 2

(Footnote Typing Frame - Revise)

Revise Footnote

DISK01

J. J. Vreeland, What to Look for When You Review Programming Documents for Product Usability, Technical Report TR03.124 (December, 1980); may be obtained from the IBM Corporation, Santa Teresa Laboratory, 555 Bailey Avenue, P. O. Box 50020, San Jose, CA 95150.

When finished, press ENTER.

The format of the footnote text and the page presentation characteristics for footnotes are determined by the Document or Alternate Format and the Footnote Format. After the footnote and body text have been assembled, the footnote text will always be single spaced regardless of the line spacing of the body text. The Context Field on the First Status Line of the Footnote Typing Frames will display either "Create Footnote" or "Revise Footnote", as appropriate.

In order to create a reference to an already existing footnote, operator procedure is to specify the diskette name, document name, and page number for the footnote and set "Create or Revise Footnote Text" to "No" in the Footnote Menu (MENU 3). After the operator has specified the document name and diskette name the first time a footnote was included, the default will be the previous document and diskette name used.

During document assembly, body text and footnote text are resolved. Resolution requires combined pagination and merge operations if both body and footnote text are to appear on the same page.

Footnote text is formatted for output to a display for review or to a printer by either a Paginate Document task, a Merge task, or a Paginate/Hyphenate operation of a Check Document task. The Paginate Document task will assemble the document to permit the operator to view the pages of the document made up of body and footnote text exactly as it will be printed.

The makeup of the footnote text at the bottom of the page will be:
Begin Formatted Text Control (BFT)
Line Format Change (to set footnote format)
Begin Keep Control
Required Carrier Return (for blank line above separator line)
Separator line, Required Carrier Return
Required Carrier Return (for blank line below separator line)
Footnote Text
Line Format Change (to return to format prior to footnote)
"n" number of indent tabs (where "n" is determined from the indent level at the Begin Formatted Text control)
End Keep Control
End Formatted Text Control (EFT)

The footnote reference number or other designation in the body text will be used to determine the footnote number or other designation to be printed and displayed. The system will automatically insert footnote designations together with any leading and trailing characters at the beginning of the footnotes automatically during assembly only.

Ordinarily, the system will assign footnote numbers in sequential order. However, if the operator has specified that a particular number be used, the system will assign that number to the footnote, and subsequent system assigned numbers will be determined using that number as a base.

Automatic sequencing may be interrupted by the presence of non-numeric footnote reference designations. The next numeric footnote reference will resume the automatic sequencing by the system.

If footnotes are inserted, moved, or deleted from the assembled document, then the document must be reassembled to renumber the footnotes.

Table 2 describes the routine performed by the assembly supervisor 100. This is the main routine that controls the pagination and merge operations.

This main routine (DOCPA) invokes other routines to adjust lines, make page ending decisions, and process, format, and renumber footnotes.

<u>TABLE 2</u>

```
BEGIN (DOCPA)
    OBTAIN FORMATTING INFORMATION FOR DOCUMENT
    INITIALIZE CONTROL BLOCKS AND WORK AREAS
    GO TO STARTING PAGE
    IF PRESERVE PAGE ENDINGS IS NOT INDICATED THEN
        UNTIL END OF DOCUMENT OR CANCEL PRESSED DO
            IF READJUSTING LINE AND A FOOTNOTE WAS
            ENCOUNTERED ON THAT LINE THEN
                INVOKE (FNNUM) - UPDATE/INSERT FOOTNOTE
                NUMBER IN BODY TEXT
            ENDIF
            IF SPELL-ASSISTED HYPHENATION IS ON THEN
                PERFORM SPELLING-ASSISTED HYPHENATION WITH
                LINE ADJUST
            ELSE
                PERFORM LINE ADJUST
            ENDIF

        IF THE LINE IS NOT TO BE READJUSTED THEN
            CALL (LINEPOS) TO DETERMINE IF LINE POSITION
            CAUSES A PAGE END DECISION
            IF PAGE END DECISION THEN
                DETERMINE LOCATION OF PAGE END
            ELSE
                IF LINE END CODE IS A PE OR RPE THEN
                    INDICATE PAGE END DECISION
                ENDIF
            ENDIF
            IF PAGE END DECISION THEN
                CALL (PAGEEND) TO INSERT A PAGE END AND
                INCREMENT THE POINT OF OPERATION TO NEXT
                PAGE
            ELSE
                INCREMENT PAST LINE END CODE
            ENDIF
```

```
            ENDIF
         ENDDO
         INVOKE (EDOC) - FOOTNOTE END OF DOCUMENT
         PROCESSOR
      ENDIF
      CLEANUP AFTER TERMINATING PAGINATE
      CLEANUP FOOTNOTE PROCESSING
      FREE WORK AREAS
      END TABLE 2 (DOCPA) RETURN TO CALLER
```

Table 3 describes a subroutine (LINEPOS) of the routine DOCPA. This subroutine calculates the positional change caused by line ending codes. The paginator (DOCPA) uses this information in determining where to make page ending decisions. The subroutine (LINEPOS) also invokes a routine (RSOLVE) to fetch and resolve footnote text.

13

## TABLE 3

```
BGNPROC (LINEPOS)

    DETERMINE LINE POSITION CHANGE

    IF THE LINE END CAUSES THE LINE POSITION TO CHANGE

    THEN UPDATE THE LINE POSITION CHANGE BY THE LINE

    SPACING

        SAVE LINE SPACING

    ENDIF

    OBTAIN THE LINE DENSITY FOR 1 LINE

    SAVE THE LINE DENSITY FOR THE LINE SPACING

    CALCULATE AND SAVE THE LINE POSITION CHANGE AT THE

    END OF THE LINE

    IF A FOOTNOTE REFERENCE WAS ENCOUNTERED ON THE

    LINE THEN

        INVOKE (RSOLVE) - RESOLVE FOOTNOTE INTO THE

        FOOTNOTE BUFFER

        ENDIF

    IF FOOTNOTE ROUTINE WANTS PAGE END DECISION THEN

        SET PAGE END DECISION

        ENDIF

    ADD LINE POSITION ESCAPEMENTS TO PENDING FOOTNOTE

    ESCAPEMENTS

    DETERMINE NUMBER OF LINES FROM BOTTOM OF PAGE

    DETERMINE NEW LINE POSITION

ENDPROC TABLE 3 LINEPOS
```

Table 4 describes a subroutine (PAGEEND) of the routine DOCPA that makes page ending decisions by inserting a page end code into the document TSB 240. Prior to inserting the page end code, the subroutine (PAGEEND) invokes a routine (EPAG) to process and insert all footnote text accumulated in the formatted footnote TSB 140 or stored on diskette unit 24 into document TSB 240.

14

### TABLE 4

```
BGNPROC PAGEEND
    IF THERE IS PENDING FOOTNOTE TEXT THEN
        INVOKE (EPAG) - FOOTNOTE END OF PAGE PROCESSOR
    ENDIF
    IF NOT A PAGE END CODE THEN
        INSERT THE PAGE END CODE
    ELSE
        MOVE ACROSS PAGE END
        EXIT IF END OF TEXT PAGES
        MOVE TO START OF TEXT ON NEXT PAGE
    ENDIF
    IF PRINT INDICATED THEN
        PRINT PAGE
    ENDIF
    ENDPROC TABLE 4 PAGEEND
```

Table 5 describes the routine (FNNUM) which determines the type of footnote number or designations to be used and when to reset and/or increment the numbering or designations.

## TABLE 5

```
BEGIN (FNNUM)
    IF FOOTNOTE REFERENCE RESETS THE FOOTNOTE NUMBERING
    THEN
        RESET THE FOOTNOTE COUNTER TO THE SPECIFIED VALUE
        INSERT THE COUNTER INTO THE BODY TEXT
    ELSE
        IF THIS IS THE FIRST FOOTNOTE OF THE DOCUMENT AND
        NUMBERING IS NOT BEING DONE ON A PER PAGE BASIS
        THEN
            SET THE FOOTNOTE COUNTER TO 1
        INSERT THE COUNTER INTO THE BODY TEXT
    ELSE
        INCREMENT THE FOOTNOTE COUNTER
        IF THIS IS THE FIRST FOOTNOTE OF A PAGE AND
        NUMBERING IS BEING DONE ON A PER PAGE BASIS THEN
            SET THE FOOTNOTE COUNTER TO 1          .
        ENDIF
        IF FOOTNOTE GRAPHIC NUMBER IS NOT SPECIFIED THEN
            INSERT THE COUNTER INTO THE BODY TEXT
        ELSE
            SET I = FOOTNOTE COUNTER
            DO UNTIL I = 0
                INSERT FOOTNOTE GRAPHIC
                I = I-1
            ENDDO
        ENDIF
    ENDIF
    ENDIF
END TABLE 5 (FNNUM)
```

The routine RSOLVE in Table 6 is invoked by the paginator routine (DOCPA) if the footnote placement is specified to be "bottom of page" not "bottom of document". If the footnote placement is specified to be "bottom of document", then resolution occurs in the routine EDOC. Its function is to resolve one or more footnote reference controls that the paginator encountered after adjusting the cursored body text line during document pagination. Note that the paginator (DOCPA) invokes this routine only after completing the line adjustment of the cursored line and additionally determining that the cursored line will fit on the current page. This routine:

a) insures that the footnote format values are in a range that will enable feasible resolution. These include the maximum number of footnote text lines, and the number of blank lines between footnotes,

b) determines whether the current page is to be terminated prematurely. This occurs when the first footnote text line for the footnote reference that is being processed will not appear on the same page as its reference. This usually occurs when there is enough footnote text pending such that the maximum number of footnote text lines is surpassed,

c) resolves the footnote references encountered on the current line via the invocation of routine GETFN to fetch and resolve each footnote reference.

<div align="center">

TABLE 6
</div>

```
BEGIN (RSOLVE)

    IF THERE ARE FOOTNOTES TO RESOLVE FOR THE CURRENT

    LINE THEN

        IF AT LEAST ONE MORE FOOTNOTE TEXT LINE WILL FIT

        AT THE BOTTOM OF THE CURRENT PAGE BEING

        PAGINATED THEN

            IF THE RESOLUTION ALGORITHM TO BE USED IS THE

            LIMITED TSB ALGORITHM THEN

                INITIALIZE THE FORMATTED FOOTNOTE LIMITED TSB

                INVOKE GETFN - RESOLVE/FORMAT FOOTNOTES ON

                THIS LINE

                IF THE FORMATTED FOOTNOTE LIMITED TSB BECAME

                FULL THEN

                    RESTORE POINT OF OPERATION TO THE FIRST

                    FOOTNOTE OF THIS PAGE

                    RE-INITIALIZE PARAMETERS FOR THE FIRST

                    FOOTNOTE OF THIS PAGE

                    INVOKE GETFN - RESOLVE/FORMAT FOOTNOTES ON

                    THIS LINE USING INDEFINITE LENGTH ALGORITHM

                ENDIF

            ELSE

                INVOKE GETFN - RESOLVE/FORMAT FOOTNOTES ON

                THIS LINE USING THE INDEFINITE LENGTH

                ALGORITHM

            ENDIF

        ELSE

            INDICATE PREMATURE PAGE TERMINATION DUE TO

            INSUFFICIENT ROOM AT THE BOTTOM OF THE PAGE FOR

            ONE MORE FOOTNOTE TEXT LINE

        ENDIF

    ENDIF

    RETURN

END TABLE 6 (RSOLVE)
```

The routine GETFN in Table 7 is invoked by the routine RSOLVE to perform the actual resolution of footnote references. Its function is to resolve each footnote reference control that the paginator encountered after adjusting the cursored body text line. It is already assumed that there is room at the bottom of the page for at least one more footnote text line and that the footnote placement is the bottom of page, not bottom of document.

Resolution is performed one of two ways:

If all of the footnotes on a page can be copied and formatted into the formatted footnote TSB (140), then the limited footnote algorithm is used. This method does a minimal amount of diskette accessing and performs almost all processing in memory. The result is fast formatting and resolution of each footnote reference since all of the formatted footnotes will be in memory when the routine EPAG is called at the end of the page to insert the footnotes at the bottom of the page.

This method is used most of the time for footnote placement at the bottom of a page unless very large footnotes are being processed.

If not all of the footnotes on a page will fit into the formatted footnote TSB 140, then the indefinite footnote algorithm is used. This involves storing the current body text page back onto the diskette unit 24 and moving the TSB point of operation to the page that contains the footnote text to be formatted and resolved (even if the page is in another document). Once the footnote is formatted it is stored back onto the diskette and the TSB point of operation is moved back to its original point in the body text page. With this approach the routine EPAG will fetch the footnote text from diskette unit 24 to the bottom of the page.

Resolution typically involves the following items:

Formatting the footnote text based on the active footnote format. This implies that the Document or Alternate Document Format (whichever is active) will be scanned in order to obtain the parameters required to format the footnote text correctly.

Inserting the appropriate footnote number bracketed within a BFT/EFT control sequence with the appropriate leading/trailing text and/or controls prior to the footnote text.

Calculating the number of footnote text lines corresponding to the footnote reference being processed.

Updating the number of pending footnotes on the current line to be inserted.

Calculating the total vertical escapement due to footnote text that is to be inserted at the bottom of the page. This value is used by the paginator in its page ending decision logic.

## TABLE 7

```
BEGIN

    OBTAIN ADDRESSABILITY TO THE FIRST FOOTNOTE

    REFERENCE TO BE RESOLVED

    UNTIL THERE ARE NO MORE FOOTNOTES TO BE RESOLVED DO

        IF PERFORMING LIMITED RESOLUTION AND BLANK LINES

        MUST BE INSERTED TO DELIMIT THIS FOOTNOTE THEN

            INSERT THE BLANK LINES VIA PROGRAM SEGMENT

            BLANK_LN

        ENDIF

        COPY THE FOOTNOTE TEXT INTO THE LIMITED TSB AND

        DETERMINE THE NUMBER OF FOOTNOTE TEXT LINES VIA

        THE PROGRAM SEGMENT COPY_FN

        IF PERFORMING LIMITED RESOLUTION AND THE ENTRY

        COULD NOT BE RESOLVED SUCCESSFULLY THEN

            INSERT INTO THE LIMITED TSB THE APPROPRIATE

            ERROR MESSAGE

        ENDIF

        OBTAIN THE NUMBER OF LINES FOR THIS FOOTNOTE

        REFERENCE
```

```
        CALCULATE THE VERTICAL ESCAPEMENT THAT WILL BE
        GENERATED FOR THE FOOTNOTE TEXT LINES
        CORRESPONDING TO THIS FOOTNOTE REFERENCE
        UPDATE THE TOTAL VERTICAL ESCAPEMENTS FOR ALL
        FOOTNOTES ON THIS PAGE
        SETUP TO PROCESS THE NEXT FOOTNOTE
     ENDDO
     UPDATE THE ESCAPEMENT VALUES FOR THE PAGINATOR VIA
     PROGRAM SEGMENT UPDATE
     SET AN APPROPRIATE EXIT RETURN CODE
     RETURN
  BEGSEG (BLANK_LN)
     DETERMINE HOW MANY BLANK LINES MUST BE INSERTED TO
     PROVIDE FOOTNOTE SPACING
     IF THE PREVIOUS FOOTNOTE DID NOT END WITH A LINE
     ENDING CONTROL THEN
        INSERT A REQUIRED CARRIER RETURN TO FORCE THE
        POINT OF INSERTION FOR THE BLANK DELIMITER LINES
        TO THE START OF A LINE
     ENDIF
     UNTIL ALL THE BLANK LINES ARE INSERTED INTO THE
     LIMITED TSB BUFFER DO
        INSERT A REQUIRED CARRIER RETURN PRIOR TO THE
        POINT OF OPERATION
     ENDDO
  ENDSEG (BLANK_LN)
  BEGSEG (COPY_FN)
     IF PERFORMING LIMITED FOOTNOTE ALGORITHM RESOLUTION
        THEN COPY THE FOOTNOTE TEXT INTO THE FORMATTED
        FOOTNOTE LIMITED TSB
     ELSE
        GO TO THE FOOTNOTE PAGE VIA THE INDEFINITE LENGTH
        DOCUMENT TSB BY MOVING THE TEXT STORAGE BUFFER
        POINT OF OPERATION TO THE DESIRED FOOTNOTE PAGE
     ENDIF
     INSERT THE FOOTNOTE NUMBER SEQUENCE PRIOR TO THE
```

19

```
      FOOTNOTE TEXT
      SETUP A COUNTER THAT WILL KEEP TRACK OF THE NUMBER
      OF FOOTNOTE TEXT LINES FOR THE FOOTNOTE REFERENCE
      CONTROL
      UNTIL THE END OF THE FOOTNOTE TEXT IS FOUND DO
         ADJUST THE FOOTNOTE TEXT LINE BETWEEN THE LEFT AND
         RIGHT MARGINS
         INCREMENT THE COUNTER THAT IS KEEPING TRACK OF THE
         NUMBER OF FOOTNOTE TEXT LINES
      ENDDO
      IF THERE ARE NO LINES IN THE FOOTNOTE TEXT PAGE THEN
         INSERT A REQUIRED CARRIER RETURN
         SET THE NUMBER OF LINES FOR THIS ENTRY TO 1
      ENDIF
      SAVE THE NUMBER OF TEXT LINES CALCULATED IN THE
      ENTRY'S LINE COUNT FIELD
      IF NOT PERFORMING LIMITED TSB MODE RESOLUTION THEN

      IF THE FOOTNOTE TEXT PAGE'S PAGE ENDING CONTROL IS
      NOT AT THE START OF A LINE THEN
         INSERT A REQUIRED CARRIER RETURN PRIOR TO THE
         PAGE END CONTROL
      ENDIF
      MOVE THE POINT OF OPERATION TO THE START OF THE
      FOOTNOTE TEXT PAGE
      DELETE THE FOOTNOTE NUMBER SEQUENCE. THE ROUTINE
      EPAG WILL INSERT LATER
      STORE THE FORMATTED FOOTNOTE TEXT PAGE BACK TO THE
      FOOTNOTE DISKETTE
   ENDIF
ENDSEG (COPY_FN)
BEGSEG (UPDATE)
   DETERMINE THE MAXIMUM NUMBER OF FOOTNOTE TEXT LINES
   THAT MAY BE INSERTED IN A PAGE
   IF THE NUMBER OF AVAILABLE LINES TO INSERT IS
   GREATER THAN THE MAXIMUM NUMBER OF FOOTNOTE TEXT
```

```
        LINES THAT MAY BE INSERTED IN A PAGE THEN

            SET THE NUMBER OF AVAILABLE LINES TO INSERT EQUAL

            TO THE MAXIMUM NUMBER OF FOOTNOTE TEXT LINES THAT

            MAY BE INSERTED IN A PAGE

        ENDIF

        UPDATE THE NEW VALUE FOR NUMBER OF TEXT LINES TO

        INSERT

        UPDATE THE NEW VALUE FOR ESCAPEMENT DUE TO TEXT

        LINES THAT ARE TO BE INSERTED

        INSURE THAT THE CALCULATED ESCAPEMENT WILL ALL FIT

        IN THE CURRENT PAGE. ADJUST VALUE IF THE ESCAPEMENT

        IS TOO MUCH

    ENDSEG (UPDATE)

    END (GETFN)
```

The purpose of the routine EPAG in Table 8 is to move FORMATTED footnote text to the end of the current page. The footnote text resides either in the formatted footnote TSB 140 (if the limited algorithm is used) or on pages in the footnote library (in a separate document or on page 9000 or above if in the same document).

Upon invocation, a page end decision has been made by the paginator and the TSB point of operation is at the start of a line. This line will be forced to the next page via the insertion of a page end control, but before the page end control is inserted, this routine must insert (prior to the TSB point of operation) the appropriate number of formatted footnote text lines along with all the necessary formatting controls. All the information required for these insertions is available in the footnote control block 108 and footnote reference buffer 110.

After determining how many lines it must insert, this routine inserts the necessary formatting controls to precede the footnote text, the separator line, and the formatting controls to following the footnote text.

After the formatting controls are inserted, this routine either fetches all of the formatted footnote text from the formatted footnote TSB 140 (if the limited algorithm was able to be used) or (if the indefinite length algorithm had to be used) then it fetches in the footnote text for the first footnote. The footnote's respective entry in the footnote reference buffer 110 contains the pointers to each footnote text page. Note that the footnote reference buffer 110 causes the system to have an "internal resolution limit" of about 20 footnotes per page if each footnote is stored in a separate document and up to 142 footnotes per pages if each footnote is stored on page 9000 or above of the same document that contains the body text with the corresponding footnote references.

If necessary, lines that have been inserted in the previous page will be deleted after the entire footnote text is fetched.

If the entire footnote fits and more footnote text is pending, the insertion sequence will continue with the next footnote.

If the entire footnote won't fit, then the footnote text that won't fit will be deleted. These lines will appear on the next page.

After the insertion is complete, the necessary pointers in the footnote resolution control block 108 are updated. The footnote resolution buffer will also be updated to reflect the insertions.

TABLE 8

```
BEGIN

  MODIFY THE VERTICAL ESCAPEMENT DUE TO PENDING
  FOOTNOTE TEXT LINES THAT ARE TO BE INSERTED AT THE
  BOTTOM OF THIS CURRENT PAGE DUE TO ANY "WIDOW" OR
  "ORPHAN" LINE DECISIONS MADE BY THE PAGINATOR
  IF IT HAS BEEN DETERMINED THAT THERE ARE FORMATTED
  FOOTNOTE TEXT LINES TO INSERT AT THE BOTTOM OF THIS
  CURRENT PAGE THEN
      SAVE THE CURRENT PAGE END LOCATION
      INSERT PRIOR TO THE CURRENT POINT OF OPERATION THE
      FOOTNOTE TEXT FORMATTING SEQUENCE THAT WILL
      ENCAPSULATE THE PENDING FOOTNOTE TEXT
      IF PERFORMING LIMITED MODE TSB ALGORITHM THEN
          INSERT THE PENDING FOOTNOTE TEXT VIA PROGRAM
          SEGMENT LIMITED
      ELSE
          INSERT THE PENDING FOOTNOTE TEXT VIA PROGRAM
          SEGMENT INDEF
      ENDIF
      RESTORE POINT OF OPERATION TO PAGE END LOCATION
  ENDIF

  RETURN
BEGSEG (LIMITED)
  OBTAIN THE VERTICAL ESCAPEMENT OF THE FOOTNOTE TEXT
  LINES TO BE INSERTED
  IF THE INTERNAL RESOLUTION LIMIT HAS NOT BEEN
  REACHED AND ALL OF THE PENDING FOOTNOTE TEXT WILL
  FIT THEN
      INSERT ALL OF THE PENDING FOOTNOTE TEXT
  ELSE
      ADVANCE TO THE TOP OF THE LIMITED TSB BUFFER
      MOVE THE POINT OF OPERATION TO THE END OF THE LAST
      FOOTNOTE LINE THAT IS TO BE COPIED
      INSERT INTO PAGE THE FOOTNOTE TEXT THAT IS BOUNDED
      BY THE TOP OF LIMITED TSB BUFFER AND THE POINT OF
      OPERATION
```

```
    ENDIF
    UPDATE THE FOOTNOTE CONTROL BLOCK AND FOOTNOTE
    REFERENCE BUFFER TO REFLECT THE NUMBER OF FOOTNOTE
    TEXT LINES INSERTED
ENDSEG (LIMITED)
BEGSEG
    OBTAIN THE VERTICAL ESCAPEMENT DUE TO FOOTNOTE TEXT
    LINES THAT ARE TO BE INSERTED
    OBTAIN THE OFFSET TO THE FIRST FOOTNOTE ENTRY IN
    THE FOOTNOTE RESOLUTION BUFFER
    SETUP A COUNTER FOR THE NUMBER OF LINES INSERTED
    UNTIL ALL THE FOOTNOTE TEXT LINES THAT ARE TO APPEAR
    ON THIS PAGE ARE INSERTED DO
        IF THE FOOTNOTE REFERENCE WAS RESOLVED
        SUCCESSFULLY THEN
            INSERT THE FOOTNOTE TEXT
        ELSE
            INSERT INTO TEXT THE APPROPRIATE FOOTNOTE
            RESOLUTION ERROR MESSAGE
        ENDIF
        ADD TO THE COUNTER KEEPING TRACK OF HOW MANY LINES
        HAVE BEEN INSERTED THE NUMBER OF INSERTED LINES
        FOR THIS FOOTNOTE
        SUBTRACT FROM THE COUNTER KEEPING TRACK OF HOW
        MUCH ESCAPEMENT REMAINS TO BE INSERTED BY THE
        INSERTED ESCAPEMENT
        IF THERE IS STILL MORE ROOM FOR FOOTNOTE TEXT THEN
            DETERMINE THE NUMBER OF BLANK LINES TO INSERT
            FOR FOOTNOTE SPACING
            DETERMINE THE ESCAPEMENT DUE TO THESE BLANK
            LINES
            IF THERE IS ROOM FOR THESE BLANK LINES THEN
                ADJUST THE INSERTION ESCAPEMENT COUNTER
                ACCORDINGLY
                ADJUST THE INSERTION LINE COUNTER ACCORDINGLY
                INSERT THE BLANK LINES INTO TEXT
```

```
        SETUP TO PROCESS THE NEXT FOOTNOTE
     ELSE
        INDICATE THAT NO MORE FOOTNOTE TEXT CAN BE
        INSERTED
     ENDIF
   ENDIF
ENDDO
UPDATE THE FOOTNOTE CONTROL BLOCK AND FOOTNOTE
REFERENCE BUFFER TO REFLECT THE NUMBER OF FOOTNOTE
TEXT LINES INSERTED
IF THERE WILL BE NO FOOTNOTE TEXT LINES FLOWING TO
THE NEXT PAGE AND SYSTEM IS PERFORMING REGULAR
RESOLUTION THEN
   STOP USING THE INDEFINITE ALGORITHM SO THAT THE
   LIMITED ALGORITHM WILL BE USED ON THE NEXT PAGE
ENDIF
ENDSET (INDEF)


END (EPAG)
```

## TABLE 9

```
BEGIN (EDOC)
   IF FOOTNOTES ARE BEING PLACED AT THE END OF THE
   DOCUMENT AND THE END OF THE DOCUMENT HAS BEEN
   REACHED AND NO FOOTNOTE TEXT HAS BEEN RESOLVED THEN
      OBTAIN POINTER TO THE FOOTNOTE REFERENCE BUFFER
      CONTAINING POINTERS TO EVERY FOOTNOTE FOUND IN THE
      DOCUMENT
      UNTIL THE LAST REFERENCE HAS BEEN RESOLVED DO
         FETCH FOOTNOTE TEXT
         INSERT THE NUMBER OF BLANK LINES AS SPECIFIED BY
         THE "NUMBER OF BLANK LINES BETWEEN FOOTNOTES"
         PARAMETER
      ENDDO
   ENDIF
END TABLE 9 (EDOC)
```

24

EP 0 094 516 B1

In summary, a unique method of, and system for, formatting footnotes is provided in order to reduce operator attention and errors, and meet author desires and needs. Prior to input of a document, a menu is presented to the operator for selecting and defining a desired footnote format. The operator has the flexibility of defining the format by specifying a separator line including the makeup thereof, an indent level for both the footnote designations and the first line of each footnote, an indent level for the entire footnote, and an interfootnote spacing to be applied when more than one footnote is to appear on a page of the document. The parameters thus established will remain in effect until changed. A change in any one of these parameters will be global in nature and affect the entire document. Thereafter, body text is keyed up to a footnote reference point. During this body text keying, the text is displayed and editing is permitted. At the footnote reference point, a menu is called from which a footnote task is selected. This causes a display frame to be presented for keying the footnote. Editing the footnote is also permitted. Following input of the footnote, the operator recalls the body text display frame for continued keying, and the footnote is stored away in a footnote library.

Upon recall of the body text display frame, the system applies an appropriate footnote reference designation to the body text at the footnote reference point, and logs the location in the footnote library of the corresponding footnote. Following input keying of the body and footnote text, operator procedure calls for causing the system to assemble the body and footnote text.

The assembly operation involves combined merge and pagination operations. Following assembly, the document can be display recalled on a page basis for review and editing. Thereafter, the document is ready to be printed.

During input of a footnote to the footnote frame, one set of the above-mentioned parameters is in effect, and during document assembly all specified parameters will be applied to the footnotes. That is, during input, specified indent levels will be in effect and applied to the keyed and displayed footnotes.

## Claims

1. A text processing system, including a display unit (22) and a keyboard (14), for formatting separately stored footnote text made up of a number of footnotes, for combination with the body text during assembly of a document for display on said display unit, said system including means for formatting said footnote text based on operator's inputs, characterized in that

said operator's input specify a maximum number of footnote text lines to be allowed on pages of said document, and an interfootnote spacing to be applied when a plurality of footnotes are to appear on a page of said document, and

it comprises means for rendering said interfootnote spacing changeable in the whole document.

2. A system according to Claim 1 wherein said operator's inputs specify various aesthetic parameters such as an indent level for at least one line of said footnote text, a makeup of a separator line for separating said footnote and body text, or a maximum number of lines to be dedicated to said footnote text on each page of said document.

3. A system according to claims 1 or 2 including means for merging and paginating said document for effecting said defined format by assembling said footnote and body text.

4. A system according to any one of the preceding claims wherein said formatting is based on operator's inputs definining a new format at any location in said document.

5. A system according to anyone of the preceding claims wherein said operator's inputs are entered by keying in a specific choice made from a selection menu displayed on said display unit upon operator's request.

## Patentansprüche

1. Textverarbeitungssystem enthaltend ein Anzeigegerät (22) und eine Tastatur (14) zur Formatierung eines gretrennt gespeicherten, aus einer Anzahl von Fussnoten bestehenden Fussnotentextes zur Verknüpfung mit dem Grundtext während der Zusammenstellung einer Unterlage zur Anzeige am genannten Anzeigegerät, wobei das genannte System Mittel enthält zur Formatierung des genannten Fussnotentextes auf der Grundlage von Bedieneingaben, dadurch gekennzeichnet, dass

die genannte Bedieneingabe eine maximale Anzahl von Fussnoten-Textlinien angibt, die auf den Seiten der genannten Unterlage zugelassen werden können, und eine Zwischenfussnotenabstand, der anzuwenden ist, wenn eine Mehrzahl von Fussnoten auf einer Seite der genannten Unterlage erscheinen sollen, und

es Mittel enthält, um den genannten Zwischenfussnotenabstand in der gesamten Unterlage veränderlich zu machen.

2. System nach Anspruch 1, worin die genannten Bedieneingaben unterschiedliche ästhetische Parameter angeben wie beispielsweise einen Einzugspegel für zumindest eine Zeile des genannten Fussnotentextes, einen Umbruch einer Trennungslininie zur Trennung des genannten Fussnoten- und Grundtextes, oder eine maximale Anzahl von Zeilen, welche dem genannten Fussnotentext auf jeder Seite der genannten Unterlage gewidmet werden sollen.

3. System nach Anspruch 1 oder 2, enthaltend Mittel zum Mischen und Paginieren der genannten

# EP 0 094 516 B1

Unterlage zur Vollbringung des genannten definierten Formats durch Zusammensetzen des genannten Fussnoten- und Grundtextes.

4. System nach einem der vorangehenden Ansprüche, worin die genannte Formatierung auf den Bedieneingaben beruht, welche ein neues Format an einer beliebigen Stelle in der genannten Unterlage definieren.

5. System nach einem der vorangehenden Ansprüche, worin die genannten Bedieneingaben durch Einstasten einer, aus einem auf Operatoranforderung auf dem genannten Anzeigegerät dargestellten Auswahlmenu getroffenen spezifischen Wahl eingegeben werden.

## Revendications

1. Un système de traitement de texte comprenant une unité d'affichage (22) et un clavier (14) pour formatter du texte de notes en bas de page emmagasiné séparément et composé d'un certain nombre de notes en bas de page, pour combinaison avec du texte principal pendant l'assemblage d'un document pour affichage sur ladite unité d'affichage, ledit système comprenant des moyens pour formatter ledit texte de notes en bas de page en se basant sur les entrées de l'opérateur, caractérisé en ce que:

lesdites entrées de l'opérateur spécifient un nombre maximal autorisé de lignes de texte de notes en bas de page sur des pages dudit document, et un espacement à appliquer entre les notes en bas de page lorsqu'une pluralité de notes en bas de page doivent apparaître sur une page dudit document, et

en ce qu'il comprend des moyens pour permettre la modification dudit espacement entre les notes en bas de page dans tout le document.

2. Un système selon la revendication 1 dans lequel lesdites entrées de l'opérateur spécifient divers paramètres esthétiques comme un niveau de décalage pour au moins une ligne dudit texte de notes en bas de page, la composition d'une ligne de séparation pour séparer ladite note en bas de page et le texte principal ou un nombre maximal de lignes à réserver audit texte de notes en bas de page sur chaque page dudit document.

3. Un système selon la revendication 1 ou 2 comprenant des moyens pour fusionner et paginer ledit document afin de réaliser ledit format défini en assemblant lesdits textes de notes en bas de page et principal.

4. Un système selon l'une quelconque des revendications précédentes dans lequel ledit formattage est basé sur des entrées de l'opérateur définissant un nouveau format en n'importe quel emplacement dudit document.

5. Un système selon l'une quelconque des revendications précédentes dans lequel lesdites entrées de l'opérateur sont entrées au clavier en faisant un choix dans un menu de sélection affiché sur ladite unité d'affichage à la demande de l'opérateur.

FIG. 1

FIG. 2

FIG. 3

FIG. 4

FIG. 5

FIG. 6

FIG. 7

1

FIG. 8

FIG. 9

EP 0 094 516 B1